# EUROPEAN PATENT APPLICATION

(11) **EP 3 016 400 A2**
(43) Date of publication of application: **04.05.2016**
(21) Application number: 15191986.7
(22) Date of filing: 28.10.2015
(51) Int. Cl.: H04N 21/422

(54) **DISPLAY APPARATUS, SYSTEM, AND CONTROLLING METHOD THEREOF**

(30) Priority: 31.10.2014 KR 20140149909
(71) Applicant: Samsung Electronics Co., Ltd., Gyeonggi-do 16677 (KR)
(72) Inventor: LIM, Dong-keun, Gyeonggi-do (KR); KIM, Chan-jin, Gyeonggi-do (KR)
(74) Representative: Hewett, Jonathan Michael Richard

(57) **Abstract**

A display apparatus, a system, and controlling methods are provided. The display apparatus includes: a display configured to display a user interface (UI) screen; a receiver configured to receive a control signal from a remote control device; and a controller configured to move a cursor on the displayed UI screen based on the received control signal and, in response to the cursor being positioned in a preset area determined based on information about the UI screen, operate in a fine control mode.

## Description

The present invention relates to a display apparatus, a system, and a controlling method thereof, and more particularly, to a display apparatus for controlling movement of a cursor, a system, and a controlling method thereof.

Recent advances in electronic technologies have led to the development and distribution of various types of electronic products. In particular, various types of display apparatuses, such as a television (TV), a portable phone, a personal computer (PC), a notebook PC, a personal digital assistant (PDA), and the like are widely used in many homes.

However, as the uses of display apparatuses have increased, so has user demand for enhanced functionality of the display apparatuses. Therefore, manufacturers have increased efforts to meet the needs of users, and thus products that have new capabilities have been developed.

In particular, apparatuses that include a display like a TV, a smartphone, a tablet PC, or the like, have been provided with increasingly high resolution and/or increasing display size, which allows greater amounts of information to be displayed on the screen. As a result, the number of objects that may be selected by a user when interacting with the display has increased. Additionally, the sizes of the objects displayed have become smaller.

Due to the increased number of objects displayed and/or the decreased size of the objects displayed, the selection of the objects by a user may become more difficult and the user may be required to perform several manipulations in order to move a cursor in order to select a desired object.

Therefore, there is a need for methods of increasing a convenience of a user to control a movement of a cursor.

The exemplary embodiments provide a display apparatus that may operate in a fine control mode, a system, and a controlling method thereof.

According to an aspect of an exemplary embodiment, there is provided a display apparatus including: a display configured to display a user interface (UI) screen; a receiver configured to receive a control signal from a remote control device; and a controller configured to move a cursor on the displayed UI screen based on the received control signal and, in response to the cursor being positioned in a preset area determined based on information about the UI screen, operate in a minute control mode.

The display apparatus may further include: a storage configured to store the information about the UI screen. The information about the UI screen may include characteristic information of an object displayed within the UI screen, and the controller may be configured to operate in the minute control mode in response to the cursor being positioned in an area in which a preset object is positioned, wherein the preset object is determined based on the characteristic information of the object.

The characteristic information of the object may include at least one of information about a function provided by the object, preference information of the object, and size information of the object.

The information about the UI screen may include position information about the preset area within the UI screen. In response to a position of the present area being changed according to a user manipulation, the controller may be configured to update the information about the UI screen stored in the storage as information about the changed position.

The preset area may be an area including a preset object.

The minute control mode may include at least one of reducing a movement speed of the cursor within the preset area, displaying a sub-menu corresponding to an object included in the preset area, and a mode for enlarging and least a part of the preset area.

The controller may be configured to enlarge at least one of an object area included in the preset area, an area adjacent to the preset area, and an area corresponding to a movement path of the cursor within the preset area.

The controller may be configured to enlarge at least a part of the preset area based on an enlargement shape that is defined by a user input.

In response to the minute control mode in which the controller operates, the controller may be configured to provide a visual feedback on the displayed UI screen to indicate that the controller operates in the minute control mode.

The display apparatus may further include a detector configured to recognize at least one of a voice of the user and a motion of the user. The controller may be configured to cancel the minute control mode based on at least one of a control signal received from the remote control device, the voice of the user, and the motion of the user.

The controller may be configured to control to display a menu screen for selecting whether to activate a function of the minute control mode.

According to an aspect of another exemplary embodiment, there is provided a system including: a server configured to store information about a user interface (UI) screen providing a minute control mode; and a display apparatus configured to receive a control signal from a remote control device. The display apparatus may be configured to receive the information from the server, display the UI screen based on the received information, move a cursor on the UI screen based on the control signal received from the remote control device, and operate in the minute control mode in response to the cursor being positioned in a preset area of the UI screen.

The display apparatus may be configured to determine the preset area of the UI screen based on the information received from the server about the UI screen. Further, the minute control mode may include at least one of reducing a movement speed of the cursor within the preset area, displaying a sub-menu corresponding to an object in the preset area, and enlarging at least a part of the preset area.

According to an aspect of another exemplary embodiment, there is provided a method of controlling a display apparatus, the method including: displaying a user interface (UI) screen; receiving a control signal from a remote control device; moving a cursor on the UI screen based on the received control signal; and operating in a minute control mode in response to the cursor being position in a preset area determined based on information about the UI screen.

The information about the UI screen may include characteristic information of an object displayed within the UI screen. The operating in the minute control mode may include: comprise operating in the minute control mode in response to the cursor being positioned in an area in which a preset object is positioned, wherein the preset object is determined based on the characteristic information of the object displayed within the UI screen.

The characteristic information of the object displayed within the UI screen may include at least one of information about a function provided by the object, preference information of the object, or size information of the object.

The information about the UI screen may include position information about the preset area within the UI screen. The operating in the minute control mode may include: updating the information about the UI screen in response to a position of the preset area being changed.

The preset area may be an area including a preset object.

The minute control mode may include at least one of reducing a movement speed of the cursor within the preset area, displaying a sub menu corresponding to an object included in the preset area, and enlarging and providing at least a part of the preset area.

The operating in the minute control mode may include: enlarging at least one of an object area included in the preset area, an adjacent area including the preset area, and an area corresponding to a movement path of the cursor within the preset area.

The operating in the minute control mode may include: enlarging and providing at least a part of the preset area based on an enlargement shape that is defined by a user input.

The above and/or other aspects will be more apparent by describing certain exemplary embodiments with reference to the accompanying drawings, in which:
FIG. 1 is a block diagram illustrating a structure of a display apparatus according to an exemplary embodiment;
FIG. 2 is a block diagram illustrating a structure of a display apparatus according to another exemplary embodiment;
FIG. 3 is a view illustrating a user interface (UI) screen according to an exemplary embodiment;
FIGs. 4 and 5 are views illustrating a minute control mode operation according to an exemplary embodiment;
FIG. 6 is a view illustrating a changed position of a preset area according to an exemplary embodiment;
FIGs. 7 through 11 are views illustrating a minute control mode according to various exemplary embodiments;
FIG. 12 is a view illustrating a visual feedback indicating that a display apparatus operates in a minute control mode, according to an exemplary embodiment;
FIG. 13 is a block diagram illustrating a structure of a display apparatus according to another exemplary embodiment;
FIG. 14 is a view illustrating an enlargement providing mode according to an exemplary embodiment;
FIG. 15 is a view illustrating an object that is differently displayed based on preference information, according to an exemplary embodiment;
FIGs. 16 and 17 are block diagrams illustrating a structure of a system according to various exemplary embodiments of the present invention;
FIG. 18 is a flowchart illustrating a method of controlling a display apparatus according to an exemplary embodiment; and
FIG. 19 is a flowchart illustrating a process of controlling a movement of a cursor according to an exemplary embodiment.

Exemplary embodiments are described in greater detail with reference to the accompanying drawings.

In the following description, the same drawing reference numerals are used for identical elements that appear in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or explanations are not described in detail since they would obscure the exemplary embodiments with unnecessary detail.

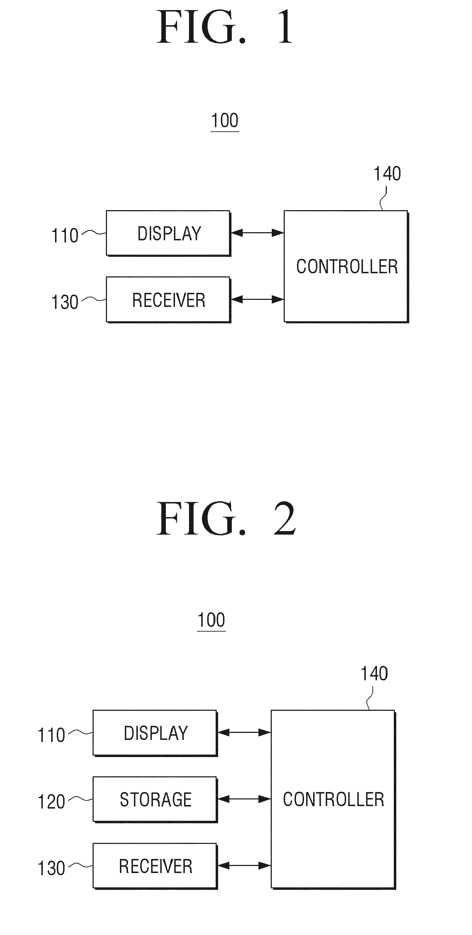

FIG. 1 is a block diagram illustrating a structure of a display apparatus 100 according to an exemplary embodiment.

Referring to FIG. 1, the display apparatus 100 includes a display 110, a receiver 130, and a controller 140. Here, the display apparatus 100 may be realized as various types of electronic devices such as a TV, an electronic bulletin board, an electronic table, a large format display (LFD), a smartphone, a tablet PC, a desktop PC, a notebook PC, etc.

The display 110 may display a user interface (UI) screen including various types of contents or objects and a cursor for selecting and executing various types of contents or objects on the UI screen. In detail, the display 110 may be realized as a liquid crystal display (LCD), an organic light-emitting display (OLED), a plasma display panel (PDP), or the like to display the UI screen.

The receiver 130 may receive a pointing signal (control signal) from a remote control device (not shown). Here, the pointing signal refers to a signal for controlling a movement of the cursor displayed on the UI screen displayed on the display apparatus 100. In other words, the cursor displayed on the UI screen may be moved in response to the pointing signal received from the remote control device.

A function key provided in the remote control device may be manipulated to generate the pointing signal received from the remote control device. If the remote control device includes direction keys indicating up, down, right, and left directions, and a user presses one of the direction keys indicating the up, down, right, and left directions, a pointing signal corresponding to the pressed direction key may be generated and then transmitted to the receiver 130 of the display apparatus 100. The controller 140 may move the cursor displayed on the UI screen in up, down, right, and left directions corresponding to the direction indicated by the received pointing signal.

If the remote control device is realized as a pointing device, and the user positions the remote control device toward the display apparatus 100 to transmit the pointing signal, the controller 140 may display the cursor to indicate the current position of the remote control device. If the user moves the remote control device in a desired direction, the controller 140 may move the cursor on the display to enable the cursor to indicate the movement of the remote control device.

If the remote control device is realized as a smartphone, a pointing signal may be generated that corresponds to a touch input of the user on a touch screen of the smartphone. The pointing signal from the smartphone may be transmitted and then received by the receiver 130, and the controller 140 may move the cursor in accordance with the movement indicated by the received pointing signal.

The controller 140 may move the cursor on the UI screen based on the received pointing signal and, if the cursor is positioned in a preset area of the UI screen determined based on information about the UI screen, controller 140 may operate in a minute control mode. The minute control mode may also be referred to as a fine control mode in which navigation of the UI screen is performed at a higher or finer resolution level. As described below, in exemplary embodiments the minute control mode may include reducing a movement speed of the cursor while the cursor is located within the preset area, displaying a sub-menu corresponding to an object included in the preset area, and/or enlarging display of at least a part of the preset area. However, the minute control mode is not limited to these exemplary embodiments and in other exemplary embodiments the minute control mode may include other operations that enhance user interaction with the UI screen when the cursor is positioned within the preset area. In this regard, the minute control mode may also be referred to as an enhanced control mode.

A process of receiving the pointing signal from the remote control device and moving the cursor through the controller 140 based on the received pointing signal has been described above. Therefore, a detailed description of an operation of moving the cursor on the UI screen through the controller 140 based on the received pointing signal is not repeated.

The controller 140 may determine the preset area based on the information about the UI screen, and the information about the UI screen may be stored in a local memory. This will be described in detail with reference to FIG. 2.

FIG. 2 is a block diagram illustrating a structure of a display apparatus 100 according to another exemplary embodiment.

Referring to FIG. 2, the display apparatus 100 includes a display unit 110, a storage 120, a receiver 130, and a controller 140. Here, the display 110 and the receiver 130 have been described in the previous exemplary embodiments, and thus their detailed descriptions are not repeated.

The storage unit 120 may store information about a UI screen. Here, the information about the UI screen may include all kinds of information related to content, an object, a menu, an icon, an application program, etc. displayed on the UI screen.

The information about the UI screen stored in the storage unit 120 may include position information about a preset area within the UI screen. Here, the preset area refers to an area into which a cursor goes so as to enable the controller 140 to operate in a minute control mode.

Therefore, the controller 140 may determine the position information about the preset area among the information about the UI screen stored in the storage 120 and, if the cursor is positioned in the preset area, operate in the minute control mode.

The information about the UI screen stored in the storage 120 may include characteristic information of an object. Also, if it is determined that the cursor is positioned in an area in which a preset object is positioned, based on the characteristic information of the object, the controller 140 may operate in the minute control mode.

Here, the preset object refers to an object on which the cursor is positioned or selected so as to enable the controller 140 to operate in the minute control mode.

In other words, the information about the UI screen stored in the storage 120 may include information about at least one of a preset area and a preset object existing within the UI screen.

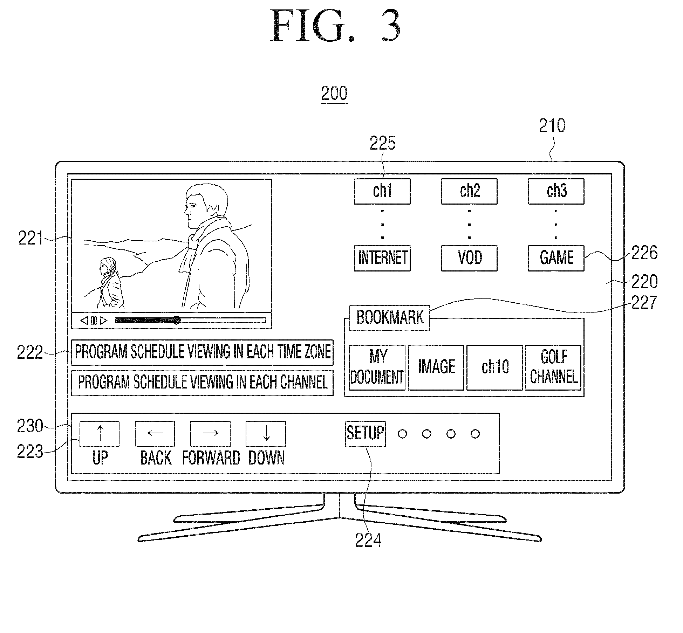

Also, if the cursor is positioned in the preset area or the preset object based on the information about at least one of the preset area and the preset object, the controller 140 may operate in the minute control mode. This will be described in detail with reference to FIG. 3.

FIG. 3 is a view illustrating a UI screen according to an exemplary embodiment.

Referring to FIG. 3, a display 210 of a display apparatus 200 displays a UI screen 220. In detail, the UI screen 220 shown in FIG. 3 includes an image 221 that is currently displayed, a program schedule viewing item 222 in each time zone or each channel, a control item 223, a setup item 224, a channel select item 225, an application item 226, a bookmark item 227, a preset area 230, etc. The program schedule viewing item 222 is used to display information about programs, such as electronic program guide (EPG) information, etc. The control item 223 is used to control a screen other than the currently displayed UI screen 220 to be displayed, such as by scrolling a screen included in the preset area 230 upwards, returning to a previous screen, going to a next screen, or scrolling the screen downwards. The setup item 224 is used to change a setup of the display apparatus 200, and the channel select item 225 is used to change a channel. The application item 226 is used to execute an application program such as the Internet, video on demand (VOD), a game, or the like, and the bookmark item 227 is used to collect items that are designated to by a user as frequently used.

The storage 120 may include characteristic information of objects such as the image 221, the program schedule viewing item 222, the control item 223, the setup item 224, the channel select item 225, the application item 226, and the bookmark item 227 that are displayed on the UI screen 220.

As shown in FIG. 3, the storage 120 may also include information about the preset area 230 displayed on the UI screen 220, i.e., position information about an area preset within the UI screen 220.

In detail, characteristic information of an object may include at least one of information about a function provided by the object, preference information of the object, and size information of the object.

For example, referring to FIG. 3, the characteristic information of the object may include at least one of information indicating that the image 221 displayed on the UI screen 220 may provide a function of playing, rewinding, or fast-forwarding a frame of a currently played content in a desired time zone, preference information of the image 221, and size information of the image 221.

The characteristic information of the object may also include at least one of information indicating that the program schedule viewing item 222 may provide a function of notifying about programs scheduled in each time zone or in each channel, such as EPG information, start times and end times of the programs, and content of the programs, preference information of the program schedule viewing item 222, and size information of the program schedule viewing item 222.

Also, the characteristic information of the object may include at least one of information about functions respectively provided by the control item 223, the setup item 224, the channel select item 225, the application item 226, and the bookmark item 227; preference information of the image 221, the program schedule viewing item 222, the item 223, the setup item 224, the channel select item 225, the application item 226, and the bookmark item 227; or size information of the image 221, the program schedule viewing item 222, the control item 223, the setup item 224, the channel select item 225, the application item 226, and the bookmark item 227.

In FIG. 3, the UI screen 220 has been described as including the image 221, the program schedule viewing item 222, the control item 223, the setup item 224, the channel select item 225, the application item 226, and the bookmark item 227. However, and the UI screen is not limited to these specific items and in other exemplary embodiments the UI screen 220 may include various types of items that may be reconfigured according to or by users.

Also, if the cursor is positioned in an area in which the preset object determined based on the characteristic information of the object is positioned, the controller 140 may operate in the minute control mode.

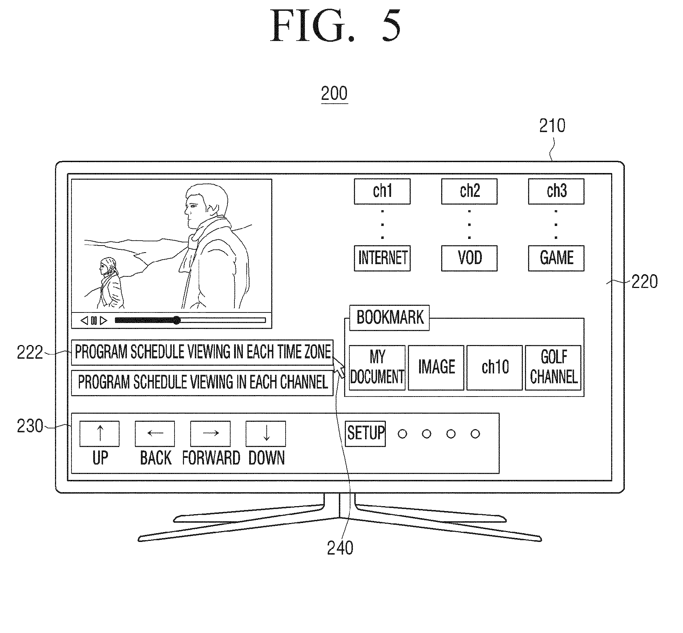

For example, referring to FIG. 5, if the user selects the program schedule viewing item 222 in each time zone, the program schedule viewing item 222 causes information to be shown about which programs are respectively scheduled in time zones, what types of the programs are scheduled, etc. through a sub-screen. The user may need to finely control a cursor 240 on the sub-screen to select one of several programs displayed on the sub-screen. Therefore, the controller 140 may determine the program schedule viewing item 222 as a preset object and, if the cursor 240 is positioned on the program schedule viewing item 222, operate in the minute control mode.

Similarly, a program schedule viewing item for each channel provides a function of showing information about which programs are respectively scheduled for the channels, the types of programs that are scheduled in the channels, etc. through a sub-screen. Also, the user may need to minutely control the cursor 240 on the sub-screen to select one of several programs displayed on the sub-screen. Therefore, the controller 140 may determine the program schedule viewing item as a preset object and, if the cursor 240 is positioned on the program schedule viewing item, operate in the minute control mode.

As described with reference to FIG. 5, the controller 140 determines a preset object based on a function provided by the program scheduling viewing item 222 or the program schedule viewing item in each channel. However, the controller 140 is not limited to determining a preset object based on a function provided by an object. For instance, in other exemplary embodiments the controller 140 may determine the preset object based on preference information, size information of the object, or other criteria.

For example, if a size of the program schedule viewing item 222 is smaller than a preset threshold value, the controller 140 may determine the program schedule viewing item 222 to be a preset object and, if the cursor 240 is positioned on the program schedule viewing item 222, the controller 140 operates in the minute control mode.

The controller 140 may also determine the preset object based on preference information of an object stored in the storage 120. However, the controller 140 may determine an area or an object in which the cursor 240 is frequently positioned, based on the number of times object has been selected, selection history information, etc. Also, the controller 140 may determine preference information of an object based on the area or the object in which the cursor 240 is frequently positioned and store the determined preference information in the storage 120.

For example, if the user frequently selects the application item 226 for executing a game application program, and thus a preference for the application item 226 is higher than a preset threshold value based on the frequency of selection, the controller 140 may determine the application item 226 to be a preset object and, if the cursor 240 is positioned on the item 226, the controller 140 operates in the minute control mode.

The storage 120 may include position information of the preset area 230 within the UI screen 220, and the controller 140 may determine a position of the preset area 230 within the UI screen 220 based on the position information of the preset area 230. Therefore, if the cursor 240 is positioned in the preset area 230, the controller 140 may operate in the minute control mode.

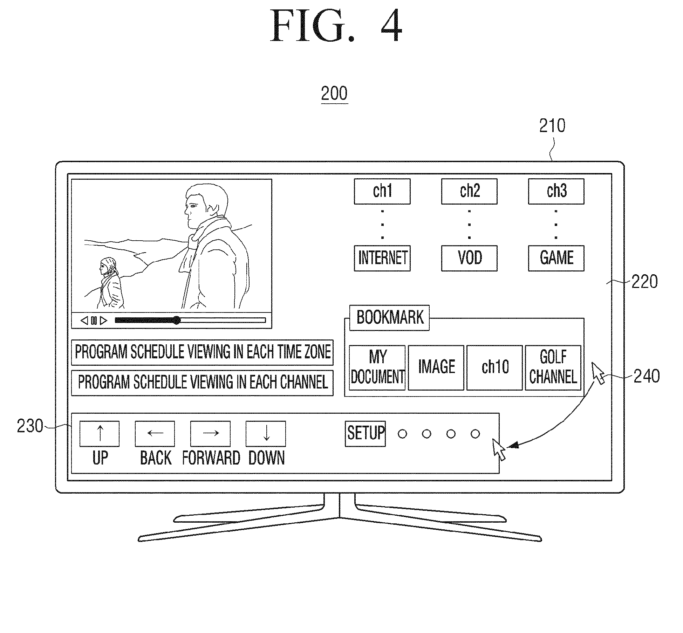

As shown in FIG. 4, if the cursor 240 is positioned in the preset area 230, the controller 140 may operate in the minute control mode.

Here, as shown in FIG. 4, the preset area 230 may be an area including at least one object such as the control item 223 for controlling and displaying a screen other than a currently displayed UI screen or the setup item 224 for changing the setup of the display apparatus 200 or an area including a preset object such as the program schedule viewing item 222 or the application item 226 for executing the game application program.

In other words, if the preset area 230 includes one object, the preset area 230 may be the one object. If the preset area 230 include a plurality of objects, the preset area 230 may be an area that includes the plurality of objects.

Also, if the cursor 240 is positioned on the preset object, the controller 140 may operate in the minute control mode. If there are a plurality of preset objects, the controller 140 may determine an area that includes the plurality of preset objects to be the preset area 230 and, if the cursor 240 is positioned in the preset area 230, the controller 140 operates in the minute control mode.

The user may change a positon of the preset area 230 within which the controller 140 may operate in the minute control mode. In this case, if the position of the preset area 230 is positioned according to a manipulation by the user, the controller 140 may update information about the corresponding UI screen stored in the storage 120 to indicate the changed position.

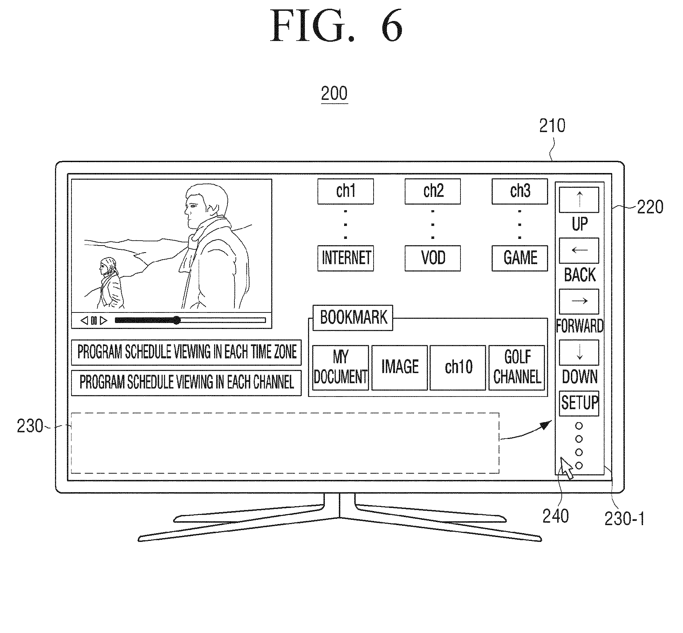

FIG. 6 is a view illustrating a changed position of a preset area according to an exemplary embodiment.

Referring to FIG. 6, the preset area 230 includes the control item 223 for controlling to display the screen other than the currently displayed UI screen or the setup item 224 for changing the setup of the display apparatus 200 as described with reference to FIG. 2, which are located at the bottom of the UI screen 220. The user may then change the position of the preset area to a preset area 230-1, such that the control item 223 and the setup item 224 are positioned on the right side of the UI screen 220.

In this case, the storage 120 may update the information about the UI screen 220 with information about the preset area 230-1 located on the right side of the screen to reflect a movement of the preset area 230 from the bottom of the UI screen 220 onto the right side of the screen.

Therefore, the controller 140 may determine that the preset area 230-1 is located on the right side of the UI screen 220 and not at the bottom of the UI screen 220, based on the updated information about the UI screen 220. Although the cursor 240 is positioned at the bottom of the UI screen 220 where the preset area 230 was previously located, the controller 140 does not operate in the minute control mode. If the cursor 240 is positioned in the preset area 230-1 positioned on the right side that is a changed position, the controller 140 may operate in the minute control mode.

If the user changes a position of a preset area included in the UI screen 220, the storage 120 may update information about the UI screen 220 with information about the changed position of the preset area. Therefore, if the cursor 240 is positioned in the preset area, which has been changed based on the updated information about the UI screen 220, the controller 140 may operate in the minute control mode.

Also, even if the user changes a position of at least one object included in the UI screen 220, the storage 120 may update the information about the UI screen 220 with information indicating that the at least one object has changed position. Therefore, if the cursor 240 is positioned in the preset area, which has been changed based on the information about the UI screen 220, the controller 140 may operate in the minute control mode.

Regardless of whether the storage unit 120 updates the information about the UI screen 220 with the information about the at least one object having changed position, the controller 140 may determine whether the at least one object is a preset object based on characteristic information of an object as described with reference to FIG. 3 and, if the cursor 240 is positioned on the determined preset object, operate in the minute control mode.

Therefore, although the user may arbitrarily change a configuration of the UI screen 220, the storage 120 may update the information about the UI screen 220 with information indicating the changed configuration. Also, if the cursor 240 is positioned on a preset area or a preset object that has changed position based on the information indicating the changed UI screen 220, the controller 140 may operate in the minute control mode.

Even if a cursor is positioned in a preset area or an area in which a preset object is positioned, the controller 140 may operate in the minute control mode. Also, if a signal for executing the minute control mode is input through a user manipulation, a user gesture, a function key of the display apparatus 100, a function key of the remote control device, or a touch panel, the controller 140 may operate in the minute control mode.

For example, if the display apparatus 100 includes a detector that performs motion recognition, the controller 140 may go enter the minute control mode and cancel the minute control mode based on hand gestures of the user. In an exemplary embodiment, if the user makes a shape of "OK" with fingers and the detector recognizes the shape of "OK", the controller 140 may operate in the minute control mode. If the user makes a shape of "1" with only one finger and the detector recognizes the shape of "1", the controller 140 may cancel the minute control mode. In other exemplary embodiments, different gestures or motions may be used to indicate entering or cancelling the minute control mode.

Also, if the remote control device includes a function key for executing and cancelling the remote control device, and thus a signal generated by pressing the function key according to a user manipulation is transmitted to the display apparatus 100, the controller 140 may operate in the minute control mode in response to the function key being pressed. If the user presses the function key two times, a signal for canceling the minute control mode may be generated and transmitted to the display apparatus 100. Here, the controller 140 may cancel the minute control mode in response to the function key being pressed twice.

If the remote control device is moved when the function key of the remote control device is pressed or the remote control device is moved when a touch recognition sensor senses a touch input, and a generated control signal is transmitted to the display apparatus 100, the controller 140 may operate in the minute control mode based on the control signal. In other words, the controller 140 may operate in the minute control mode for a time for which the function key of the remote control device is pressed or the touch recognition sensor senses the touch input. Therefore, the user may arbitrarily control a time when the user wants the minute control mode.

Here, if the pressing of the function key of the remote control device stops or the touch recognition sensor does not sense the touch input, the controller 140 may cancel the minute control mode. Also, the controller 140 may cancel the minute control mode according to a function key for cancelling the minute control mode or a touch input. For example, if a function key of the remote control device that has been mapped to a function of canceling the minute control mode, and the touch recognition sensor senses the touch input consecutively two times, the controller 140 may cancel the minute control mode.

The controller 140 may execute entering and canceling of the minute control mode based on a user manipulation, a user gesture, or a motion of the remote control device. For example, if the user rotates the remote control device in a clockwise direction, the controller 140 may operate in the minute control mode. If the user rotates or shakes the remote control device in a counterclockwise direction, the controller 140 may cancel the minute control mode.

As described above, if a cursor on a UI screen is positioned in a preset area or positioned in an area in which a preset object is positioned the controller 140 may automatically operate in the minute control mode. Also, the controller 140 may operate in the minute control mode in response to a user manipulation, a user gesture, or the like.

The minute control mode may include at least one of a mode for reducing a movement speed of the cursor 240 within the preset area 230, a mode for displaying a sub menu corresponding to an object included in the preset area 230, and a mode for enlarging and providing at least a part of the preset area 230.

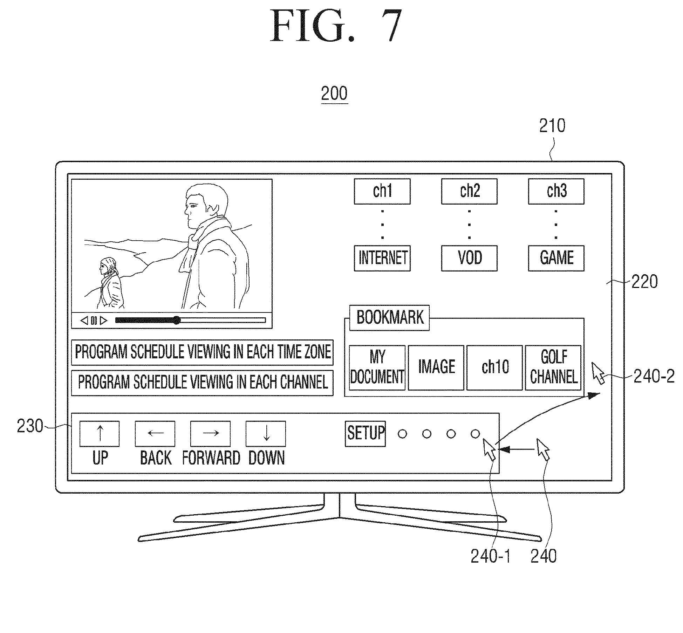

FIGs. 7 through 11 are views illustrating a minute control mode according to various exemplary embodiments.

Referring to FIG. 7, if the cursor 240 starts to go into the preset area 230, and thus a cursor 240-1 is positioned within the preset area 230, the controller 140 may operate in a mode in which movement speed of the cursor 240-1 within the preset area 230 is reduced.

For example, if the cursor 240 is positioned outside the preset area 230, the controller 140 may control the cursor 240 to be moved by four pixels at a time in response to a pointing signal received through the receiver 130. However, if the cursor 240-1 is positioned within the preset area 230, the controller 140 may control the cursor 240-1 to be moved by two pixels at a time in response to the pointing signal received through the receiver 130.

In other words, the controller 140 may differently apply a coordinate value calculation formula related to movements of the cursors 240 and 240-1 to differently control the movements of the cursors 240 and 240-1 according to whether the cursors 240 and 240-1 are located within or outside the preset area 230.

Therefore, if the cursor 240-1 is located within the preset area 230, the controller 140 may operate in the minute control mode and reduce a movement speed of the cursor 240-1. Therefore, although the pointing signal received through the receiver 130 has large transition information, the controller 140 may desensitize a reaction of the cursor 240-1 to cause the cursor 240-1 to move by a lesser amount.

If the cursor 240-1 is located within the preset area 230, the controller 140 operates in the minute control mode. However, if the cursor 240-1 is moved outside the preset area 230, i.e., a cursor 240-2 is positioned outside the preset area 230, the controller 140 may cancel the minute control mode.

For example, if the cursor 240 passes through the preset area 230 when the user moves the cursor 240, the controller 140 may operate in the minute control mode when the cursor 240 goes into the preset area 230. If the cursor 240 strays from the preset area 230, the controller 140 may cancel the minute control mode. Also, if the cursor 240 passes through the preset area 230, and the user does not want the controller 140 to operate in the minute control mode to slow a movement speed of the cursor 240, the user may select an inactivation of the minute control mode. This will be described later, together with activation of the minute control mode.

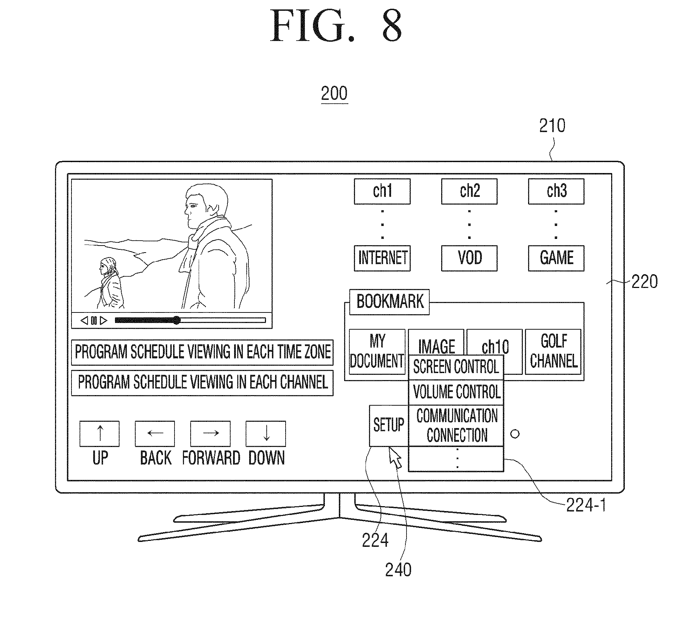

Referring to FIG. 8, if the cursor 240 is positioned on the setup item 224 that is used to change the setup of the display apparatus 200, and the setup item 224 is one object included in the preset area 230, the controller 140 may display a sub-menu 224-1 including detailed items, such as a screen control, a volume control, a communication connection, etc., in relation to the setup item 224.

Also, if the cursor 240 goes into the sub menu 224-1 including the detailed items, the controller 140 may reduce a movement speed of the cursor 240.

The sub menu 224-1 including the detailed items may be realized as an On Screen Display (OSD), a picture-in-picture (PIP), or the like. Also, a transparency of the sub menu 224-1 may be adjusted to display the sub menu 224-1 so as to enable the sub menu 224-1 to overlap the setup item 224.

If the cursor 240 does not go into the sub menu 224-1 including the detailed items for a preset time or more or there are not any selections on the sub menu 224-1, the controller 140 may cancel the minute control mode and stop displaying the sub menu 224-1.

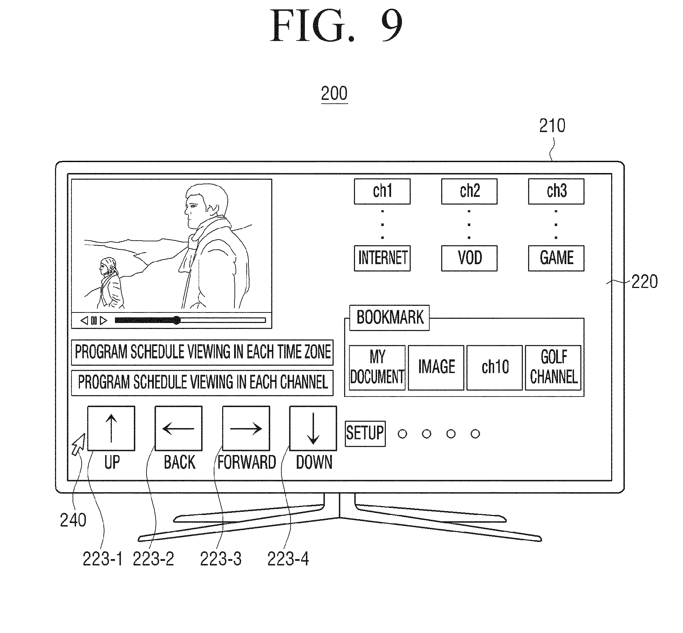

Referring to FIG. 9, if the cursor 240 is positioned in the preset area 230, the controller 140 may enlarge and provide only an object 223-1 for scrolling a screen included in the preset area 230 upwards, an object 223-2 for returning to a previous screen, an object 223-3 for going over to a next screen, and an object 223-4 for scrolling the screen downwards.

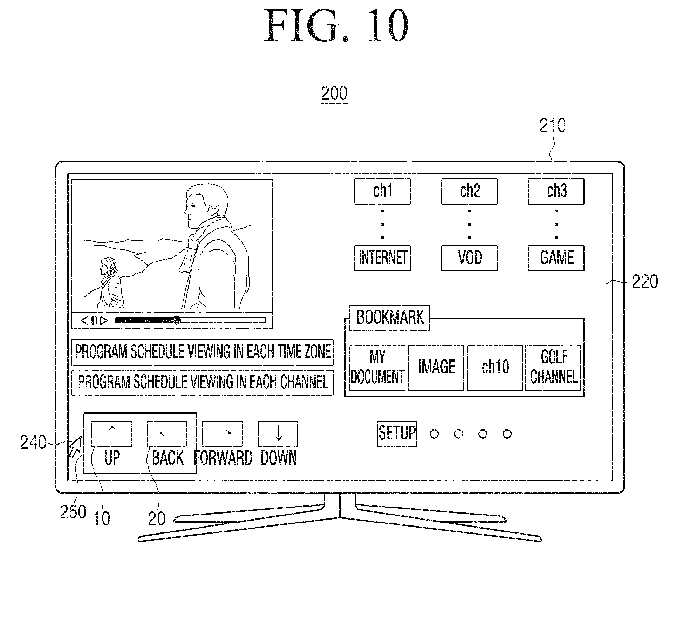

Alternatively, referring to FIG. 10, if the cursor 240 is positioned in the preset area 230, the controller 140 may enlarge and provide only an area 250 including only an object 10 for scrolling a screen and an object 20 for returning to a previous screen among the object 223-1 for scrolling the screen included in the preset area 230 upwards, the object 223-2 for returning to the previous screen, the object 223-3 for going over to the next screen, and the object 223-4 for scrolling the screen downwards.

In other words, the controller 140 may enlarge and provide all of a plurality of objects included in the preset area 230 or alternatively may enlarge and provide the area 250 including some of the plurality of objects included in the preset area 230.

Also, the controller 140 may enlarge and provide at least one of an object area included in the preset area 230, an adjacent area including the preset area 230, and an area corresponding to a movement path of the cursor 240 in the preset area 230.

As described with reference to FIGs. 9 and 10, the controller 140 may enlarge and provide at least some selected from the object 223-1 for scrolling the screen included in the preset area 230 upwards, the object 223-2 for returning to the previous screen, the object 223-3 for going over to the next screen, and the object 223-4 for scrolling the screen downwards. This corresponds to an enlargement and a provision of an object area included in the preset area 230.

The controller 140 may also enlarge and provide an area adjacent the preset area 230 to be included as the preset area 230. Here, a range of the adjacent area including the preset area 230 may be changed according to a user setup.

The controller 140 may enlarge and provide the area corresponding to the movement path of the cursor 240 in the preset area 230.

In detail, the controller 140 may continuously enlarge and provide an area corresponding to a position of the cursor 240 according to a movement direction of the cursor 240 in the preset area 230.

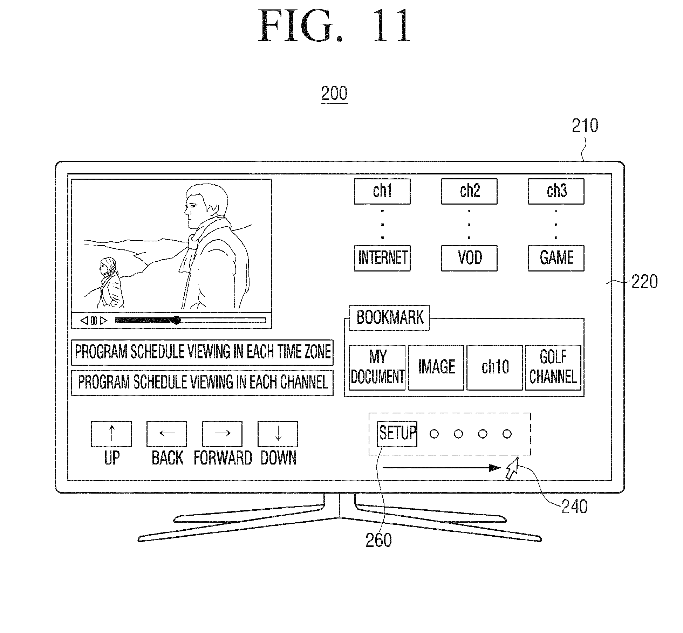

For example, referring to FIG. 11, the controller 140 may sequentially enlarge and provide an area 260 corresponding to a horizontal movement path of the cursor 240 as the preset area 230, according to a position into which the cursor 240 is moved.

For example, if the user inputs a manipulation for clicking and dragging the cursor 240, the controller 140 may sequentially enlarge and provide the area 260 generated by dragging according to a dragging direction.

The controller 140 may enlarge and provide at least a part of a preset area based on an enlargement shape determined according to a user manipulation.

For example, if the enlargement shape determined according to the user manipulation is a circular shape, the controller 140 may enlarge and provide at least a part of the preset area 230 as a circular shape.

Here, the enlargement shape determined according to the user manipulation is not limited to the circular shape and thus may be various shapes such as a rectangular shape, a water drop shape, etc.

The controller 140 may also control the enlargement shape determined according to the user manipulation to be 3-dimensionally displayed. For example, if the enlargement shape determined according to the user manipulation is the water drop shape, the controller 140 may enlarge and provide at least a part of the preset area 230 in a shape that protrudes like a surface of a water drop. Therefore, the controller 140 may differently adjust and provide an enlargement ratio in the preset area 230.

If the enlargement shape is set to a particular shape, the controller 140 may enlarge and provide at least a part of the preset area 230 in the set particular shape regardless of a user manipulation.

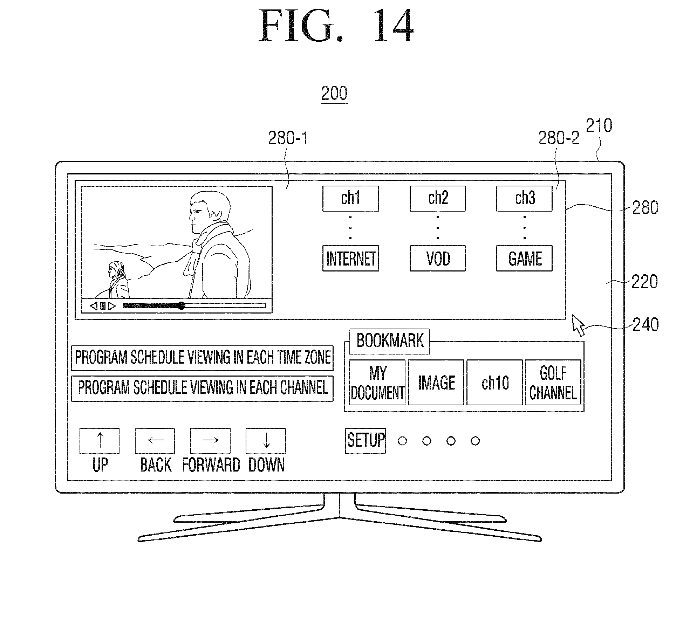

According to various exemplary embodiments, the controller 140 may enlarge and provide at least a part of a preset area and display the enlarged area through a whole screen or divide the enlarged area into different areas to display the different areas. This will be described in detail with reference to FIG. 14.

FIG. 14 is a view illustrating an enlargement providing mode according to an exemplary embodiment.

Referring to FIG. 14, the controller 140 may enlarge and provide an area 280, which is selected through the cursor 240, as a whole screen. Here, the controller 140 may enlarge the selected area 280 as the whole screen and adjust a transparency of the selected area 280 to display the selected area 280 so as to overlap the UI screen 220.

The controller 140 may enlarge the area 280 selected through the cursor 240 as the whole area, divide the enlarged area 280 into a plurality of areas, and display the plurality of areas or display the plurality of areas through a display apparatus (not shown) that is different from the display apparatus 200.

For example, the controller 140 may display an area, into which a first area 280-1 included in the area 280 selected through the cursor 240 is enlarged, through the display unit 210 of the display apparatus 200 and display an area, into which a second area 280-2 is enlarged, through an auxiliary display apparatus (not shown).

The controller 140 may enlarge the selected area 280 based on an area in which the cursor 240 is positioned. For example, the controller 140 may enlarge the selected area 280 based on a position of the cursor 240 positioned under a right side of the currently selected area 280. In other words, the controller 140 may enlarge the second area 280-2 that is close to the position of the cursor 240 by a larger amount and enlarge the first area 280-1 that is farther away from the position of the cursor 240 by a smaller amount.

In other words, the controller 140 may increase an enlargement ratio of an area that is closer to the position of the cursor 240 decrease the enlargement ratio of an area that is further away from the position of the cursor 240.

If the cursor 240 moves in a particular pattern with respect to a preset area when a preset operation operates or a function corresponding to a particular function key or a touch input is performed, the controller 140 may enlarge or reduce a corresponding area.

Here, enlargement and reduction commands may be distinguished from each other according to the particular function key or the touch input or by the preset operation, e.g., an operation performed by the hand of the user that that is not holding the remote control device.

For example, the user may control the remote control device with his right hand to control a movement of a cursor and make a circular gesture with his left hand, which causes the controller 140 to perform an enlargement function. Also, the user may make an X-shaped gesture with his left hand to cause the controller 140 to perform a reduction function.

Also, the enlargement and reduction commands may be distinguished from each other according to a movement of the cursor 240, which moves in response to a movement of the remote control device. For example, if the cursor 240 moves in a clockwise direction, the controller 140 may perform the enlargement function. If the cursor 240 moves in a counterclockwise direction, the controller 140 may perform the reduction function. The controller 140 may also determine whether to operate in the minute control mode based on the movement of the cursor 240. In other words, if the cursor 240 moves in the clockwise direction, the controller 140 may operate in the minute control mode. If the cursor 240 moves in the counterclockwise direction, the controller 140 may cancel the minute control mode.

When the controller 140 operates in the minute control mode, the controller 140 may provide a visual feedback indicating that the controller 140 operates in the minute control mode in the preset area 230.

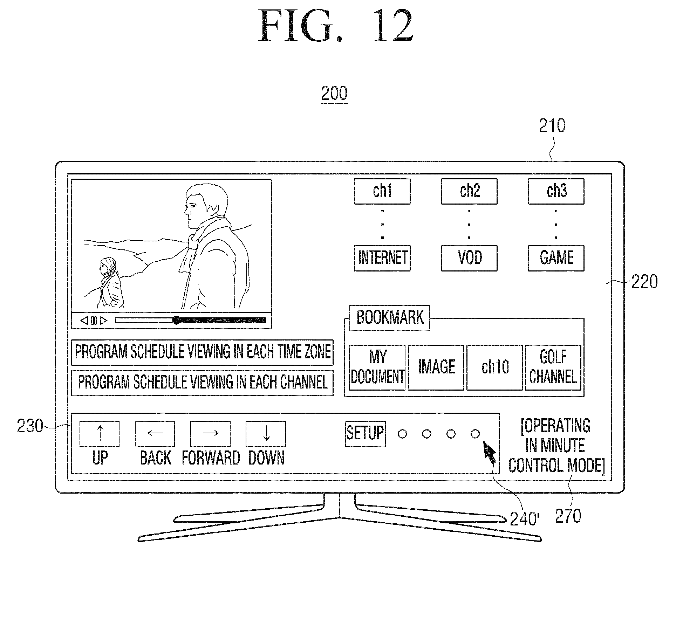

FIG. 12 is a view illustrating a visual feedback indicating that the controller 140 operates in the minute control mode, according to an exemplary embodiment.

Referring to FIG. 12, if a cursor 240' is positioned in the preset area 230 to enable the controller 140 to operate in the minute control mode, the controller 140 may change a color of the cursor 240' to indicate that the controller 140 currently operates in the minute control mode.

If the cursor 240' is positioned in the preset area 230 to enable the controller 140 to operate in the minute control mode, the controller 140 may display "Operating in minute control mode" on the UI screen 220.

When the controller 140 operates in the minute control mode, the controller 140 may change the cursor 240' into another shape without changing the color of the cursor 240'. For example, when the controller 140 operates in the minute control mode, the controller 140 may change the cursor 240' into a heart shape, a circle shape, a triangle shape, or the like not into an arrow shape. The shape into which the cursor 240' is changed may be selected through user setup.

When the controller 140 operates in the minute control mode, the controller 140 may change the cursor 240' into a preset icon, a preset emblem, or the like. Therefore, the user may recognize that the display apparatus 100 currently operates in the minute control mode. Similarly, the preset icon or the preset emblem to be displayed when the controller 140 operates in the minute control mode may be selected through user setup.

As another example, if the cursor 240' is positioned in the preset area 230, and thus the controller 140 operates in the minute control mode, the controller 140 may transmit a signal that instructs the remote control device to provide a haptic feedback to the remote control device and/or generate a preset acoustic signal to inform the user that the controller 140 is operating in the minute control mode.

If the cursor 240' is positioned in the preset area 230, and thus the controller 140 operates in the minute control mode, the controller 140 may change a size of the cursor 240' to indicate that the display apparatus 100 currently operates in the minute control mode.

When the controller 140 operates in the minute control mode, the controller 140 may change a visual effect such as the size or a shape of the cursor 240' and simultaneously generate a signal that instructs the remote control device to provide a haptic feedback and/or may generate a preset acoustic signal as described above so as to enable the user to recognize that the display apparatus 100 is currently operating in the minute control mode.

The signal indicating that the display apparatus 100 currently operates in the minute control mode is not limited to the above-described example and thus may be realized as any type of signal.

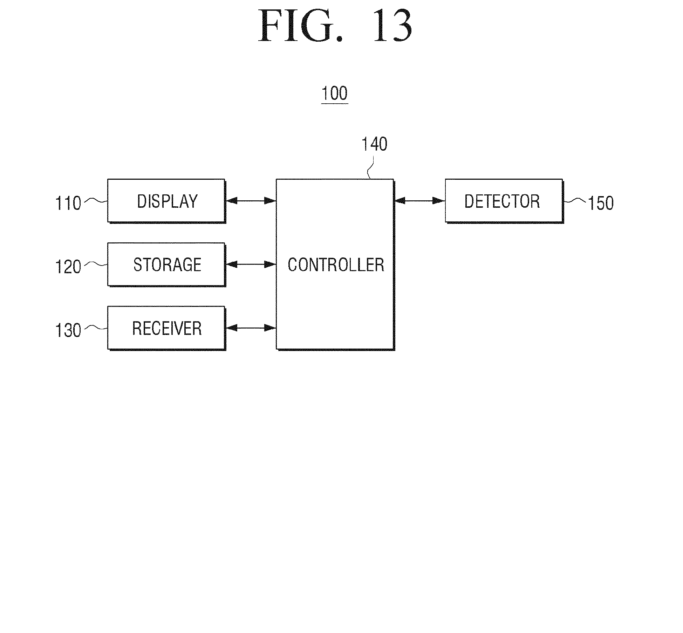

FIG. 13 is a block diagram illustrating a structure of a display apparatus 100 according to another exemplary embodiment of the present invention.

Referring to FIG. 13, the display apparatus 100 may further include a recognizer or detector 150 besides a display unit 110, a storage unit 120, a receiver 130, and a controller 140. The detector 150 may be realized as one or more detectors capable of recognizing at least one of a voice and a motion of a user.

Also, the controller 140 may cancel a minute control mode based on at least one of a control signal received from a remote control device (not shown), and the voice and the motion of the user.

As described with reference to FIG. 7, if the cursor 240 enters into the preset area 230 and then moves outside of the preset area 230, the controller 140 may operate in the minute control mode when the cursor 240 enters into the preset area 230 and cancel the minute control mode when the cursor 240 moves outside of the preset area 230. Also, a function key of the remote control device may be pressed by the user to directly cancel the minute control mode, and the controller 140 may receive a signal corresponding to the pressing of the function key and then cancel the minute control mode.

If the user utters "Cancel minute control mode", the detector 150 may recognize a voice command of the user to cancel the minute control mode. If the user makes a motion of drawing an X shape with hands, the detector 150 may recognize this motion to cancel the minute control mode.

A voice and/or a motion of the user for canceling the minute control mode may be newly set by the user, such that the user can specify a desired voice command or motion to cause the minute control mode to be canceled. Thus, when the newly set voice and/or motion of the user are recognized by the detector 150, the controller 140 may cancel the minute control mode.

The controller 140 may differently display an object that is frequently selected by the user, based on the number of times the object has been selected, selection history information of the object, etc.

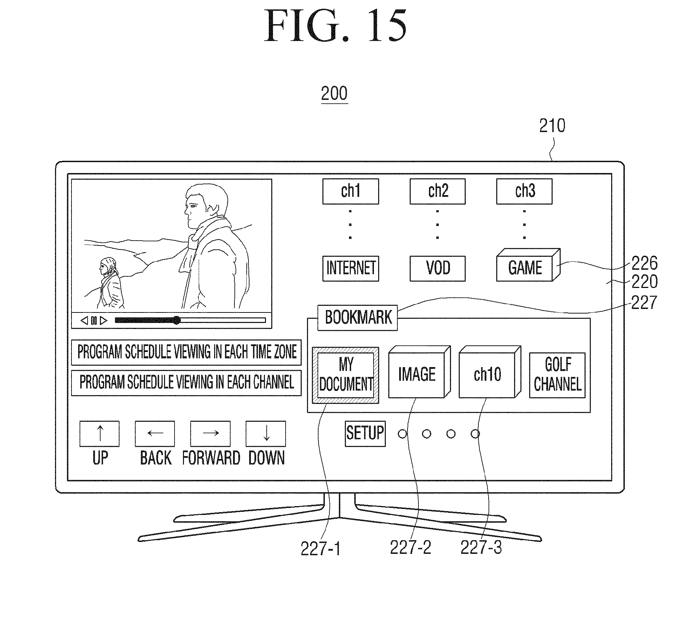

FIG. 15 is a view illustrating an object that is differently displayed based on preference information according to an exemplary embodiment.

Referring to FIG. 15, the controller 140 may determine an item 226 for executing a game application program, a my document icon 227-1 and an image icon 227-2 included in a bookmark menu 227, and an icon 227-3 for viewing ch 10 as objects, which are frequently used by the user, based on the number of times the objects have been selected, selection history information of the objects, etc. Also, the controller 140 may highlight the my document icon 227-1 of the bookmark menu 227 determined as the object frequently used by the user. In addition, the controller 140 may change and display depths of the item 226, and the image icon 227-2 and the icon 227-3 of the bookmark menu 227 that are determined as the objects frequently used by the user.

The controller 140 may cause a menu screen to be displayed for selecting whether a minute control mode function is activated.

In detail, if the user selects an option to inactivate the minute control mode function on the menu screen for selecting whether the minute control mode function is activated, the controller 140 may not operate in the minute control mode even if a cursor is positioned in a preset area.

This eliminates any inconvenience of activating the minute control mode when the user does not desire it. In other words, unless minute control mode is inactivated, whenever the cursor is positioned in the preset area when the user moves the cursor, the controller 140 operates in the minute control mode to enable a movement of the cursor to slow, enable an enlargement screen to be provided, or enable a sub menu to be displayed.

The controller 140 may display the menu screen for enabling a user to select whether to activate the minute control mode function. However, the remote control device may have a function key for enabling the user to select the function key so as to select whether to activate the minute control mode function.

Information about a UI screen may be stored in the storage 120 or may be stored in a server. Also, a display apparatus may download the information about the UI screen from the server and display the UI screen based on the downloaded information.

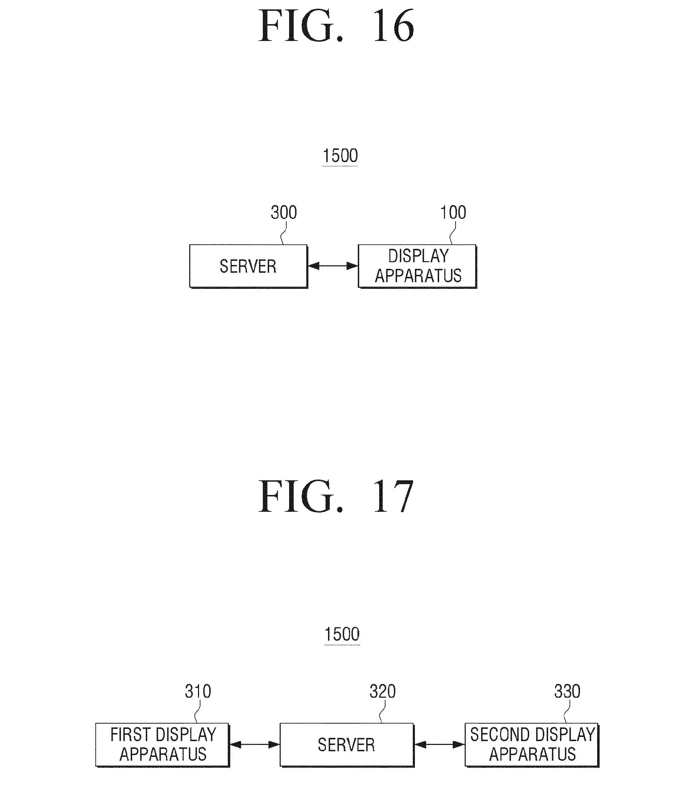

FIGs. 16 and 17 are block diagrams illustrating a structure of a system 1500 according to various exemplary embodiments.

Referring to FIG. 16, the system 1500 includes a display apparatus 100 and a server 300. Here, the server 300 may store information about a UI screen that provides a minute control mode, and the display apparatus 100 receive a signal from a remote control device (not shown).

Also, the display apparatus 100 may receive information from the server 300 and display the UI screen based on the received information. In addition, the display apparatus 100 may move a cursor on the UI screen based on a pointing signal received from the remote control device and, if the cursor is positioned in a preset area of the UI screen determined based on the received information, operate in the minute control mode.

In detail, referring to FIG. 17, the system 1500 may include a first display apparatus 310, a server 320, and a second display apparatus 300.

Here, if the first display apparatus 310 is a TV that is installed in a home of a user, the first display apparatus 310 may upload and store information of the UI screen, which is used in the first display apparatus 310, into the server 320.

The information of the UI screen may include information about the minute control mode.

If the user goes to a home of a friend, and a TV installed in a home of the friend is the second display apparatus 330, the user may want to use the second display apparatus 330 installed in the home of the friend like the TV used in the home of the user. Therefore, the second display apparatus 300 may access the server 320 to download the information of the UI screen related to the first display apparatus 310.

The second display apparatus 330 may display the same UI screen as the UI screen used in the first display apparatus 310 based on the information of the UI screen downloaded from the server 320 and the same minute control mode may be provided on the second display apparatus 330 as the minute control mode provided by the first display apparatus 310.

Therefore, the user may use the same screen as the UI screen used by the user at any time and at any location and may be provided with a function of the minute control mode.

If such information about a UI screen is stored in a server, the information about the UI screen may be set to be openly downloaded to a display apparatus. However, the information may be stored privately such that it can only be downloaded to a display apparatus by an identified user.

In detail, the information about the UI screen may further include setup information so as to download the information about the UI screen only if a user account password is recognized to identify a user.

Therefore, if another user does not know the user account password, the information about the UI screen of the user may not be downloaded to the display apparatus

Also, the information about the UI screen may be openly set to be updated by a user manipulation on the server or may openly set not to be updated. The information about the UI screen may be securely set to be updated even in a remote place or may be securely set not to be updated in the remote place.

Therefore, the user may indicate whether to open and update the information about the UI screen used by the user according the user based on security and convenience concerns.

The user account password is recognized in relation to a user identification in the above-described example but recognition is not limited thereto. All types of recognition methods of identifying a user, such as a voice recognition, a face recognition, a fingerprint recognition, etc. related to the user identification, may be applied.

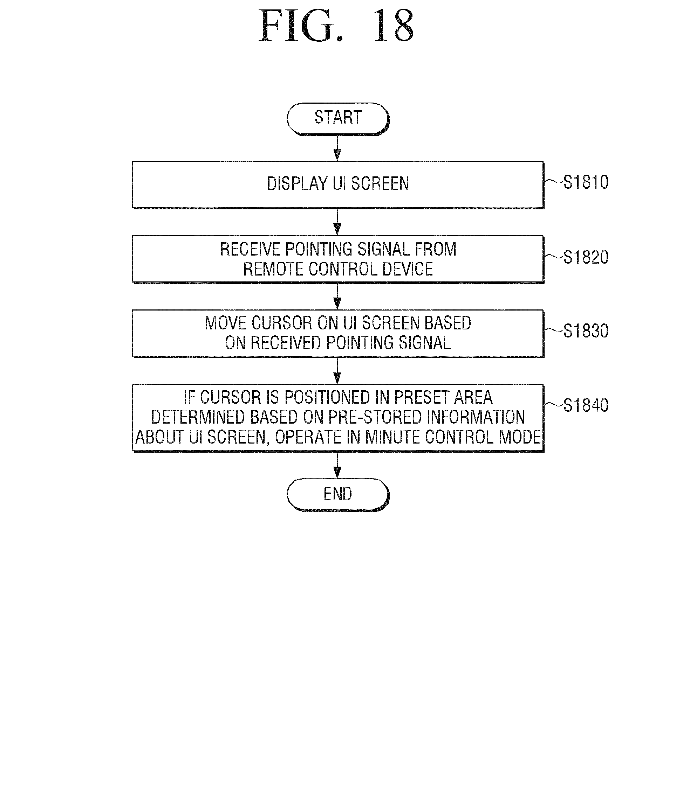

FIG. 18 is a flowchart illustrating a method of controlling a display apparatus according to an exemplary embodiment.

Referring to FIG. 18, in operation S1810, the display apparatus displays a UI screen.

In operation S1820, the display apparatus receives a pointing signal from a remote control device.

In operation S1830, the display apparatus moves a cursor on the UI screen based on the received pointing signal.

In operation S1840, the display apparatus operates in a minute control mode if the cursor is positioned in a preset area determined based on the information about the UI screen.

Here, the information about the UI screen may include characteristic information of an object displayed within the UI screen, and the display apparatus may operate in the minute control mode if the cursor is positioned in an area in which a preset object determined based on the characteristic information is positioned, in operation S1840.

The characteristic information may include at least one of information about a function provided by the object, preference information of the object, and size information of the object.

Also, the information about the UI screen may include position information about a preset area within the UI screen, and if a position of the preset area is changed according to a user manipulation, the display apparatus may update the information as information about the changed position of the preset area in operation S1840.

The preset area is an area that includes a preset object.

The minute control mode may enlarge and provide at least one of an object included in the preset area, an adjacent area including the preset area, and an area corresponding to a movement path of the cursor in the preset area.

In operation S1840, the display apparatus may enlarge and provide at least one of the object area included in the preset area, the adjacent area including the preset area, and the area corresponding to the movement path of the cursor in the preset area.

In operation S1840, the display apparatus may enlarge and provide at least a part of the preset area based on an enlargement shape determined according to a user manipulation.

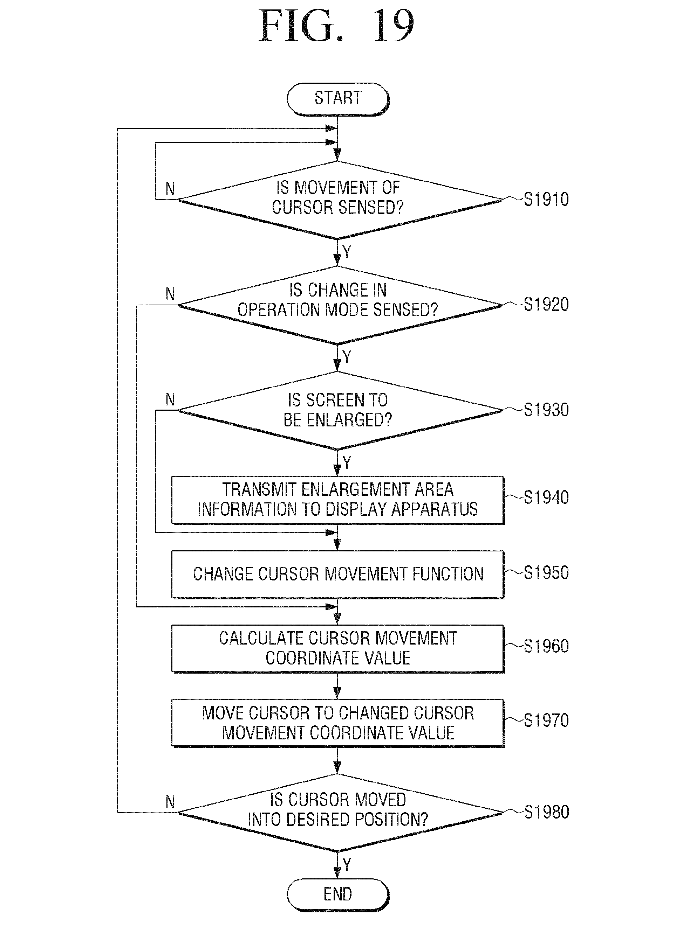

FIG. 19 is a flowchart illustrating a process of controlling a movement of a cursor according to an exemplary embodiment.

Referring to FIG. 19, in operation S1910, the controller 140 determines whether a movement of a cursor is sensed. If the movement of the cursor is sensed in operation S1910, the controller 140 determines whether an operation mode change is sensed in operation S1920. If it is determined in operation S1920 that an operation mode is changed into a minute control mode, the controller 140 determines whether a screen is to be enlarged in operation S1930. If it is determined in operation S1930 that the screen is to be enlarged, the controller 140 transmits enlargement area information to a display apparatus in operation S1940.

In operation S1950, the controller 140 changes a cursor movement function in the minute control mode. In operation S1960, the controller 140 calculates a cursor movement coordinate value according to the changed cursor movement function. In operation S1970, the controller 140 moves the cursor to the cursor movement coordinate value.

In operation S1980, the controller 140 determines whether the cursor is moved into a desired position. If it is determined in operation S1980 that the cursor is accurately moved into the desired position, the controller 140 ends the process. If it is not determined in operation S1980 that the cursor is accurately moved into the desired position, the controller 140 returns to operation S1910.

According to various exemplary embodiments as described above, a cursor may be minutely controlled to increase a convenience of a user so as to control a movement of the cursor.

There may be provided a non-transitory computer readable medium that stores a program sequentially performing a controlling method according to the exemplary embodiments.

For example, there may be provided a non-transitory computer readable medium that stores a program performing: moving a cursor on a UI screen based on a received pointing signal; and if the cursor is positioned in a preset area determined based on prestored information about the UI screen, operating in a minute control mode.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like. Also, programs as described above may be stored and provided on the storage unit 150 of the display apparatus 100 as an example of the non-transitory computer readable medium.

Also, a bus is not shown in the above-described blocks of a display apparatus, but communications between elements of the display apparatus may be performed through the bus. In addition, each device may further include a processor such as a central processing unit (CPU), a microprocessor, or the like that performs various operations as described above.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display configured to display a user interface (UI) screen;
a receiver configured to receive a control signal from a remote control device; and
a controller configured to move a cursor on the displayed UI screen based on the received control signal and, in response to the cursor being positioned in a preset area determined based on information about the UI screen, operate in a fine control mode.

2. The display apparatus of claim 1, further comprising a storage configured to store the information about the UI screen,
wherein the information about the UI screen comprises characteristic information of an object displayed within the UI screen, and the controller is configured to operate in the fine control mode in response to the cursor being positioned in an area in which a preset object is positioned, wherein the preset object is determined based on the characteristic information of the object.

3. The display apparatus of claim 2, wherein the characteristic information of the object comprises at least one of information about a function provided by the object, preference information of the object, and size information of the object.

4. The display apparatus of claim 2 or 3, wherein the information about the UI screen comprises position information about the preset area within the UI screen, and
wherein the controller is configured to update the information about the UI screen stored in the storage in response to a position of the preset area being changed.

5. The display apparatus of claim 4, wherein the preset area is an area comprising a preset object.

6. The display apparatus of any one of claims 1 to 5, wherein the fine control mode comprises at least one of a mode for reducing a movement speed of the cursor within the preset area, a mode for displaying a sub-menu corresponding to an object in the preset area, and a mode for enlarging at least a part of the preset area.

7. The display apparatus of claim 6, wherein the controller is configured to enlarge at least one of an object area in the preset area, an area adjacent to the preset area, and an area corresponding to a movement path of the cursor within the preset area.

8. The display apparatus of claim 6 or 7, wherein the controller is configured to enlarge at least a part of the preset area based on an enlargement shape that is defined by a user input.

9. The display apparatus of any one of claims 6 to 8, wherein the controller is configured to provide a visual feedback on the displayed UI screen to indicate that the controller operates in the fine control mode.

10. The display apparatus of any one of claims 1 to 9, further comprising a detector configured to recognize at least one of a voice of the user and a motion of the user,
wherein the controller is configured to cancel the fine control mode based on at least one of a control signal received from the remote control device, the recognized voice of the user, and the recognized motion of the user.

11. The display apparatus of any one of claims 1 to 10, wherein the controller is configured to display a menu screen for selecting whether to activate a function of the minute control mode.

12. A system comprising:
a server configured to store information about a user interface (UI) screen that provides a fine control mode; and
a display apparatus configured to receive a control signal from a remote control device,
wherein the display apparatus is configured to receive the information from the server about the UI screen, display the UI screen based on the received information, move a cursor on the UI screen based on the control signal received from the remote control device, and operate in the fine control mode in response to the cursor being positioned in a preset area of the UI screen.

13. The system of claim 12, wherein the display apparatus is configured to determine the preset area of the UI screen based on the information received from the server about the UI screen.

14. The system of claim 12 or 13, wherein the fine control mode comprises at least one of a mode for reducing a movement speed of the cursor within the preset area, a mode for displaying a sub-menu corresponding to an object in the preset area, and a mode for enlarging at least a part of the preset area.

15. A method of controlling a display apparatus, the method comprising:
displaying a user interface (UI) screen;
receiving a control signal from a remote control device;
moving a cursor on the UI screen based on the received control signal; and
operating in a fine control mode in response to the cursor being position in a preset area determined based on information about the UI screen.
